# EUROPÄISCHE PATENTSCHRIFT

(11) **EP 4 168 792 B1**
(45) Veröffentlichungstag und Bekanntmachung des Hinweises auf die Patenterteilung: **16.10.2024**
(21) Anmeldenummer: 21736528.7
(22) Anmeldetag: 16.06.2021
(51) Int. Cl.: G01N 29/04, G01N 29/24

(54) **VERFAHREN ZUR ZERSTÖRUNGSFREIEN PRÜFUNG VON INSBESONDERE FLÄCHIG AUSGEBILDETEN OBJEKTEN AUS EINEM FASERVERBUNDWERKSTOFF**
METHOD FOR NON-DESTRUCTIVELY TESTING OBJECTS, IN PARTICULAR PLANAR OBJECTS, MADE OF A FIBRE-REINFORCED COMPOSITE MATERIAL
PROCÉDÉ DE CONTRÔLE NON DESTRUCTIVE D'OBJETS CONÇUS EN PARTICULIER DE MANIÈRE PLANE, À BASE DE MATIÈRE COMPOSITE RENFORCÉE PAR FIBRES

(30) Priorität: 18.06.2020 DE 102020116174
(43) Veröffentlichungstag der Anmeldung: 26.04.2023
(73) Patentinhaber: Rosen IP AG, 6370 Stans (CH)
(72) Erfinder: ROELFES, Tobias, 48480 Spelle (DE); KRÜMPEL, Hanna, 48485 Neuenkirchen (DE)
(74) Vertreter: Wischmeyer, André
(86) Internationale Anmeldenummer: PCT/EP2021/066281
(87) Internationale Veröffentlichungsnummer: WO 2021/255114

(56) Entgegenhaltungen:
- GB-A- 2 545 044
- JP-A- H11 125 622
- JP-A- S63 139 250
- US-A1- 2011 041 612
- HSU DAVID K ET AL: "Applications of Electromagnetic Acoustic Transducers in the NDE of Non-Conducting Composite Materials-Hee lm** and In--Young Yang***", KSME INTERNATIONAL JOURNAL, 1 January 1999 (1999-01-01), pages 403 - 413, XP055833129, Retrieved from the Internet <URL:https://link.springer.com/content/pdf/10.1007/BF02939328.pdf> [retrieved on 20210819]
- AMATO SILVIO ET AL: "Marie Sklodowska-Curie European Training Network H2020-MSCA-ITN-2016 -GRANT 722134 -NDTonAIR NDTonAIR Continuous Reporting n°20 WP3 -Deliverable D21-D3.9: Development of a GW-UT system for testing composite panels from a remote location: INSPECTION OF COMPOSITE AEROSPACE STRUCTURES USING CAPACITIVE", 7 September 2018 (2018-09-07), pages 1 - 22, XP055833170, Retrieved from the Internet <URL:https://ec.europa.eu/research/participants/documents/downloadPublic?documentIds=080166e5bd754299&appId=PPGMS> [retrieved on 20210819]
- NIESE FRANK ET AL: "ZfP heute | Berlin 2020 69 Prüfung von Faserverbundwerkstoffen aus Luftfahrtanwendungen mit elektromagnetischem Ultraschall (EMAT)", 1 October 2020 (2020-10-01), pages 1 - 4, XP055833134, Retrieved from the Internet <URL:https://www.ndt.net/article/dgzfp2020/papers/v15.pdf> [retrieved on 20210819]
- MURAYAMA R ET AL: "Conventional electromagnetic acoustic transducer development for optimum Lamb wave modes", ULTRASONICS, IPC SCIENCE AND TECHNOLOGY PRESS LTD. GUILDFORD, GB, vol. 40, no. 1-8, 1 May 2002 (2002-05-01), pages 491 - 495, XP004357246, ISSN: 0041-624X, DOI: 10.1016/S0041-624X(02)00164-6

## Beschreibung

Die vorliegende Erfindung betrifft ein Verfahren zur zerstörungsfreien Prüfung von insbesondere flächig ausgebildeten Objekten aus einem Faserverbundwerkstoff, vorzugsweise in Luftfahrtanwendungen, der zumindest einlagig ausgebildet ist, wobei mittels eines Sendewandlers in dem Objekt ein Ultraschallsignal erzeugt wird, welches nach seiner Ausbreitung im Objekt mittels eines Empfangswandlers detektiert wird.

In Luftfahrtanwendungen, aber auch in anderen Industriebereichen werden seit einigen Jahren vermehrt Faserverbundwerkstoffe in Form von carbonfaserverstärkten Kunststoffen (CFK) oder glasfaserverstärkten Kunststoffen (GFK) eingesetzt, um besonders leichte Konstruktionen verwirklichen zu können. Durch das geringe Leergewicht eines Flugzeuges können der Treibstoffverbrauch als auch die damit verbundenen Betriebskosten minimiert werden. Allerdings sind diese Faserverbundwerkstoffe, die zumindest eine mit Fasern versehene Lage aufweisen, schwieriger als klassische Metallwerkstoffe sowohl während des Fertigungsprozesses als auch bei etwaig wiederkehrenden Inspektionen zu prüfen. Nach dem aktuellen Stand der Technik werden diese Faserverbundwerkstoffe vorwiegend mit konventionellen Ultraschallprüftechniken untersucht, indem beispielsweise mit einem piezoelektrischen Material versehener Wandler akustisch mittels eines geeigneten Trägermediums wie beispielsweise Wasser mit dem zu prüfenden, flächigen Objekt, beispielsweise einem Rumpf- oder Flügelsegment eines Luftfahrzeugs, gekoppelt wird. Hierbei hat es sich allerdings als nachteilig erwiesen, dass in den vorhandenen Materialien eine starke Schallschwächung insbesondere bei höheren Arbeitsfrequenzen die Prüfung erschwert. Dies führt zu schlechten Signal-Rausch-Verhältnissen, was eine Amplitudenbewertung der an einer Fehlstelle reflektierten bzw. transmittierten Signalanteile erschwert.

In dem Artikel "Applications of Electromagnetic Acoustic Transducers in the NDE of Non-Conducting Composite Materials" von Hsu et al. aus der dem KSME International Journal, Vol. 13, 1999, ist die Verwendung von EMUS-Wandlern in der Betrachtung von flächigen Composite-Materialien beschrieben. Auch das Dokument von Amato Sivio et al. "Marie Sklodowska-Curie European Training Network H2020-MSCA-ITN-2016 -GRANT 722134 - NDTonAIR NDTonAIR Continuous Reporting n°20 WP3 -Deliverable D21 - D3.9: INSPECTION OF COMPOSITE AEROSPACE STRUCTURES USING CAPACITIVE" beschreibt grundlegende Möglichkeiten, zur Inspektion von Verbund-Werkstoffen von Flugzeugen mittels EMUS-Wandlern.

Die GB 25 545 044 A beschreibt die Untersuchung der Plattendicke von Pipeline-Rohren mithilfe von in ihrem Abstand zueinander veränderlich angeordneten EMUS-Wandlern.

Aus der JP S63 139250 A ist ein EMUS-Wandler bekannt, der eine Mehrzahl von Frequenzen erzeugen kann, wobei ein auf den Sendewandler abgestimmter Empfangswandler mit einer Mehrzahl von Spulen verwendet wird.

Eine weitere Auslegung von EMAT-Wandlern ist aus der JP H11 125622 A entnehmbar, in der eine Vielzahl von alternierend angeordneten Permanentmagneten mit unterschiedlichen Abständen zueinander relativ zu einer Spule angeordnet sind.

Aus dem Artikel "Conventional electromagnetic acoustic transducer development for optimum Lamb wave modes" von Murayama und Mizutani sind EMUS-Wandler bekannt, die sich besonders gut mit ihren mäandrierenden Leitern zur Erzeugung von Lamb-Wellen eignen.

Es ist Aufgabe der vorliegenden Erfindung, die Detektion von Fehlstellen, insbesondere in Form von Delamination, Porenfeldern oder anderer flächig ausgebildeter Inhomogenitäten in einem flächig ausgebildeten Objekt aus einem Faserverbundwerkstoff zu verbessern.

Die Aufgabe wird gelöst durch ein Verfahren gemäß Anspruch 1 sowie durch einen Gegenstand gemäß Anspruch 10. Vorteilhafte Ausgestaltungen der Erfindung sind den Unteransprüchen sowie der nachfolgenden Beschreibung zu entnehmen.

Bei dem erfindungsgemäßen Verfahren wird das Ultraschallsignal durch den zumindest einen als EMUS-Wandler ausgebildeten Sendewandler mittels einer leitfähigen Schicht, die auf der Oberfläche des Objekts oder in diesem angeordnet ist, als elektromagnetisches Ultraschallsignal erzeugt, wobei mittels einer Auswertevorrichtung das mittels des zumindest einen als EMUS-Wandler ausgebildeten Empfangswandlers detektierte Ultraschallsignal zur Bestimmung einer Fehlstelle in Form einer Delamination, eines Porenfeldes oder anderer, dergleichen flächig ausgebildeter Inhomogenitäten verwendet wird.

Erfindungsgemäß wird zur Bestimmung der Fehlstelle in der Auswertevorrichtung die lokale Phasengeschwindigkeit und/oder die lokale Wellenlänge des empfangenen Ultraschallsignals am Ort des Empfangswandlers bestimmt und zur Bestimmung der Tiefe der Fehlstelle verwendet. Die lokale Wellenlänge ist die Wellenlänge des Ultraschallsignals an derjenigen Position des Objekts, an dem sich auf oder über der Oberfläche des Objekts der Empfangswandler befindet, d.h. der Empfangswandler und das zur lokalen Wellenlänge gehörende Ultraschallsignal liegen auf einer Senkrechten zur Oberfläche des Objekts. Analoges gilt für die lokale Phasengeschwindigkeit. Bei einer horizontal zum Untergrund ausgerichteten Fläche befindet sich der Wandler beispielsweise auf der oberen Seite des zu prüfenden Objekts, wobei das Ultraschallsignal sich dann direkt darunter befindet. Die Erfindung nutzt aus, dass, wenn ein Ultraschallsignal einer geführten Welle auf eine Inhomogenität in der Platte trifft und diese Inhomogenität auch in Schallausbreitungsrichtung verläuft, sich die physikalischen Randbedingungen ändern, so dass es Auswirkungen auf die Ausbreitung des Wellenmodes bzw. des Ultraschallsignals gibt.

EMUS-Wandler sind elektromagnetische Ultraschall-Wandler und werden auch als EMAT-Wandler bezeichnet, wobei "EMAT" für "Electromagnetic Acustic Transducer" steht. Im Gegensatz zur konventionellen Ultraschalltechnik werden hierbei elektromagnetische Wechselwirkungen genutzt, um Ultraschallsignale in das Objekt einzukoppeln bzw. aus diesem abgreifen zu können. Im Wesentlichen tragen dabei Lorenzkräfte und bei ferromagnetischen Testkörpern auch die Magnetostriktion bei. Prinzipiell besteht ein solcher EMUS-Prüfkopf oder -Wandler aus einer speziell geformten Hochfrequenzspule und einer Magnetisierungseinrichtung, vorzugsweise in Form eines Magnetjochs aus Permanentmagneten. Im Sendefall wird die Hochfrequenz-Spule mit einem Strom-Burst-Signal beaufschlagt, welches in dem leitfähigen Objekt oberflächennah Wirbelströme induziert. Durch die Überlagerung mit dem statischen Magnetfeld wirken auf die Ladungsträger oszillierende Lorenzkräfte und die Kräfte koppeln an das Materialgitter und dienen so als Quelle des Ultraschallsignals. Im Empfangsfall verläuft das Ganze dann reziprok.

Erfindungsgemäß werden die Wirbelströme in einer insbesondere oberflächennahen oder insbesondere die Oberfläche ausbildenden, leitfähigen Schicht, die sich flächig in dem zu prüfenden Bereich erstreckt und für die Prüfung zunächst aufgebracht wird oder bereits vorhanden ist, erzeugt. Vorzugsweise wird erfindungsgemäß als leitfähige Schicht bei Faserverbundwerkstoffen für Luftfahrtanwendungen das an oder in der Oberfläche des zu prüfenden flächigen Objekts oftmals vorhandene Blitzschutzgitter verwendet, welches beispielsweise als Kupfergitter in die oberste Lage des Objekts eingebettet ist. Es wurde im Rahmen der Erfindung festgestellt, dass dieses Blitzschutzgitter als leitfähige Schicht für eine ausreichende akustische Kopplung sorgt. Besonders gut funktioniert diese Kopplung, wenn die Materialstärke der elektrisch leitfähigen Komponente dicker als die Eindringtiefe des elektromagnetischen Feldes ist.

Gegenstand der Prüfung sind flächig ausgebildete Objekte, d.h. Objekte, deren Erstreckung in Prüfrichtung deutlich größer als in Richtung quer dazu ist. Für die analytische Betrachtung handelt es sich um unendlich ausgedehnte Flächen, wobei es sich real beispielsweise um ein bis mehrere Dutzend Quadratmeter große Platten handelt. Eine solche Platte z.B. für Flugzeugrümpfe ist zumindest auf der zu prüfenden Außenseite aus einem Faserverbundwerkstoff aufgebaut sind, d.h. weist zumindest eine Lage eines Faserverbundwerkstoffes auf. Diese Platte muss nicht vollständig eben sein, sondern kann für Anwendungszwecke auch gebogen oder gekrümmt ausgebildet sein.

Der Faserverbundwerkstoff kann ein- oder mehrlagig ausgebildet sein. Bei Luftfahrtanwendungen handelt es sich oftmals um fünf bis zehn oder noch mehr dünne Lagen aus einem oder unterschiedlichen Faserverbundwerkstoffen, die miteinander verbunden, insbesondere miteinander verklebt oder verschweißt sind.

Ergebnis des erfindungsgemäßen Verfahrens ist die Lokalisation einer Fehlstelle sowohl in x- und y-Richtung, d.h. entlang der Fläche des Objekts als auch deren Tiefenposition. Nachfolgend wird die Tiefenposition auch relativ zur Gesamtdicke der zu prüfenden Schicht angegeben, eine Position von beispielsweise 12,5% oder 25 % entspricht bei einer 4 mm dicken Platte aus einem Faserverbundwerkstoff dann einer Tiefe von 0,5 mm bzw. 1 mm unter derjenigen Oberfläche, auf der Sendewandler und der Empfangswandler angeordnet sind.

Das erfindungsgemäße Verfahren eignet sich vorzugsweise für die Prüfung auf Fehlstellen, die in Schallausbreitungsrichtung länger als quer dazu ausgebildet sind, d.h. die in Richtung parallel zur flächigen Erstreckung des Objekts größer sind als in Richtung der Dicke des Objekts. Insbesondere weisen die Inhomogenitäten in Schallausbreitungsrichtung zur Bestimmung der Tiefenlage eine Länge von zumindest dem Zwei- bis Dreifachen der Wellenlänge des erzeugten Ultraschallsignals auf.

Es versteht sich, dass das detektierte Ultraschallsignal nicht identisch zu dem Ultraschallsignal sein muss wie dasjenige, welches erzeugt wurde. Während der Ausbreitung des Ultraschallsignals im Medium erfährt das Ultraschallsignal durch vorhandene Fehlstellen eine Variation, so dass die Änderung des Ultraschallsignals einen Aufschluss über die entsprechende Anomalie geben kann.

Es versteht sich, dass für die Anregung der Ultraschallwelle mittels des Sendewandlers eine entsprechende Steuerelektronik verwendet wird. Diese kann mit der Auswertevorrichtung kombiniert oder zumindest teilweise separat von dieser ausgebildet sein. Die EMUS-Wandler werden somit allgemein mittels einer eine solche Steuerelektronik aufweisenden Steuereinheit für die Ansteuerung des Sendewandlers und mittels einer Auswertevorrichtung für den oder die Empfangswandler betrieben. Diese Teile einer erfindungsgemäßen Vorrichtung können zumindest teilweise in einer gemeinsamen Elektronikeinheit betrieben werden, wobei die Auswertevorrichtung zusätzlich auch separate EDV-Mittel aufweisen kann.

Im Gegensatz zur zerstörungsfreien Prüfung mit konventionellen piezoelektrischen Prüfköpfen erfolgt die Prüfung mit EMUS-Wandlern insbesondere koppelmittelfrei, d.h. die Anwendung der EMUS-Wandler auf dem zu prüfenden Objekt ist deutlich einfacher als im Stand der Technik durchzuführen, bei dem beispielsweise Tauchbecken für zu prüfende Objekte verwendet werden, um eine gute akustische Kopplung zwischen dem das Ultraschallsignal aussendenden Prüfkopf und dem Objekt zu realisieren. Es versteht sich ebenfalls, dass zwischen den erfindungsgemäß verwendeten EMUS-Wandlern und dem Objekt oftmals Luft bzw. ein Luftspalt vorhanden ist und dass Luft oder ein etwaig vorhandenes Schutzgas kein Koppelmittel darstellt. Das akustische Signal wird gemäß der Erfindung nicht in dem Sendewandler sondern mittels der leitfähigen Schicht in dem zu prüfenden Objekt selbst erzeugt, obgleich diese aus einem Faserverbundmaterial besteht.

Vorzugsweise wird mittels des Sendewandlers eine geführte Welle erzeugt, die sich in dem flächigen Objekt gut ausbreiten kann. Im Gegensatz zu konventionellen piezoelektrischen Prüfköpfen können EMUS-Wandler besonders gut modenrein und selektiv Plattenwellenmoden generieren bzw. detektieren.

Vorzugsweise werden mit den Sendewandlern zur zerstörungsfreien Prüfung Lamb-Wellen oder geführte SH-Wellen erzeugt, wobei insbesondere die A0- bzw. die S0-Mode erzeugt wird. Für die verwendeten Faserverbundwerkstoffe haben sich Anregungsfrequenzen zwischen (einschließlich) 10 und (einschließlich) 1000 kHz als besonders effizient dargestellt. Weiter vorteilhafterweise liegen die Anregungsfrequenzen im Bereich von 50 bis 500 kHz sowie insbesondere weiterhin im Bereich von 200 bis 220 kHz, insbesondere gilt dies für Platten einer Dicke von 2 bis 8 mm, vorzugsweise von 4 mm und einer Wellenlänge von 4 bis 8 mm, vorzugsweise von 6 mm.

Das erfindungsgemäße Verfahren macht es sich weiterhin zunutze, dass sich im Fall einer flächigen Erstreckung einer Fehlstelle in Ultraschallausbreitungsrichtung die Energie des ursprünglichen Ultraschallsignals aufteilt und sich oberhalb und unterhalb im Bereich der Fehlstelle variierte Ultraschallsignale ausbreiten. Eine Änderung der für das ursprüngliche Ultraschallsignal relevanten Plattendicke führt dann zu einer Arbeitspunktverschiebung im Dispersionsdiagramm, welches einen Zusammenhang zwischen Plattendicke, Wellenlänge sowie Fasen- und Gruppengeschwindigkeit sowie der Frequenz angibt. Da die Frequenz in einem linearen System als Erhaltungsgröße gilt, verändert sich also zwangsläufig die Phasengeschwindigkeit, was gleichbedeutend mit einer Änderung der Spurwellenlänge ist. Die mit der Arbeitspunktverschiebung einhergehende Änderung der Phasengeschwindigkeit bzw. der Wellenlänge des Ultraschallsignals lokal zwischen der Fehlstelle und der Oberfläche, auf der oder an der der Empfangswandler angeordnet ist, wird von diesem detektiert, so dass die Position des Empfangswandlers in x- und y- Richtung der Position der Fehlstelle entsprechend in x- und y-Richtung entspricht. Die x- und y-Richtung entsprechen der flächigen Erstreckung des Objekts, wobei die x-Richtung vorzugsweise die Messrichtung und der bevorzugt betrachteten Ausbreitungsrichtung des Ultraschallsignals entspricht.

Wie nachstehend noch näher erläutert wird, erfolgt die Bestimmung der Fehlstellenposition beispielsweise über ein rasterartiges Abtasten eines entsprechend zu untersuchenden Objekts oder mittels eines lokal entsprechend ausgedehnten vorzugsweise mehrkanaligen Empfangswandlers oder eines Arrays von Empfangswandlern.

Weiterhin wird vorzugsweise eine werkstoffspezifische Korrelation der Fehlstellentiefe mit der Phasengeschwindigkeit und/oder mit der Wellenlänge zur Bestimmung der Fehlstellentiefe verwendet. Insbesondere für vorzugsweise zu verwendende A0-bzw. S0-Lamb-Moden ergibt sich, dass je näher die Delamination an der Oberfläche positioniert ist, desto kleiner die Wellenlänge ist und umso stärker die Wellenlängenänderung bzw. Phasengeschwindigkeitsänderung des geführten Ultraschallwellensignals. Eine solche werkstoffspezifische bzw. verbundwerkstoffspezifische Korrelation kann vorher experimentell ermittelt oder bei einer Kenntnis des Aufbaus des Verbundmaterials bzw. Verbundwerkstoffs auch per Simulation ermittelt werden.

Vorteilhafterweise wird zur Bestimmung der Fehlstelle zumindest eine räumliche Fourier-Transformation des detektierten Ultraschallsignals über zumindest einen Teil einer Messstrecke des Empfangswandlers (zu einem bestimmten Zeitpunkt) durchgeführt. Es versteht sich, dass hierfür je nach Empfangswandler-bzw. Prüfkopfaufbau zunächst eine Mehrzahl von Messungen entlang dieser Messstrecke notwendig sein kann. Die Länge der Messstrecke mit dem auszuwertenden Ultraschallsignal für die Fourier-Transformation beträgt vorzugsweise zumindest 1 cm, weiter vorzugsweise zumindest 2 cm. Eine obere Grenze sind vorzugsweise 5 cm bzw. weiterhin vorzugsweise 4 cm. Ausgehend von dem Sendewandler wird damit die vom Empfangswandler abgetastete Strecke sukzessive um entsprechend große Strecken Δx geprüft. Dies wird sukzessiv vorgenommen, so dass beispielsweise ein 6 cm langes, zu überprüfendes Teilstück bei einem Wandler, dessen x-Auflösung in Messrichtung 1 cm beträgt, 6-mal geprüft wird.

Die Ergebnisse der Fourier-Transformation liegen dann im k-Raum, d.h. im Wellenzahl-Raum vor, wobei im Bereich einer sich flächig erstreckenden Fehlstelle oder Anomalie eine Verschiebung des Maximums der Wellenzahlamplitude vorliegt, da sich in diesem Bereich die Wellenlänge der geführten Welle verändert, d.h. geringer wird.

Sofern eine Mehrzahl von Spektren in Messrichtung zu verschiedenen Zeitpunkten bestimmt wurde, kann vorteilhafterweise das Maximum der Wellenzahl und/oder Phasengeschwindigkeit aus einer insbesondere statistischen Betrachtung der ermittelten Spektren zu verschiedenen Zeitpunkten bestimmt bzw. ansonsten abgelesen werden. Eine solche statistische Auswertung ist in einem einfachen Fall beispielsweise die Bildung des arithmetischen Mittels aus dem Betragsquadrat der Spektren, woraus sich dann die Wellenzahl v des Maximums und aus der Beziehung v =1/λ die Wellenlänge λ ableiten lassen.

Gemäß einer vorteilhaften Weiterbildung des erfindungsgemäßen Verfahrens wird zur Prüfung von Fehlstellen in einer Tiefenlage zwischen 0% und insbesondere 50 % der Dicke des Objekts die AO-Mode einer Lamb-Welle verwendet. Die AO-Mode lässt sich als Biegewelle des betrachteten Objekts besonders gut mittels EMUS-Wandlern anregen und besitzt keine Cut-off-Frequenz, unterhalb derer sie nicht mehr ausbreitungsfähig ist. 0 % entspricht der Oberfläche des Objekts, an der die Wandler angeordnet sind.

Alternativ oder ergänzend zur Prüfung von Fehlstellen mittels der AO-Mode einer Lamb-Welle kann die Prüfung von Fehlstellen auch mit einer SO-Mode einer LambWelle durchgeführt werden. Insbesondere zur Prüfung von Fehlstellen in einer Tiefenlage zwischen 50 % und 100 % der Dicke des Objekts, aber auch zwischen 0 % und 50 % kann zunächst die SO-Mode einer Lamb-Welle verwendet werden, wobei zur Auswertung zusätzlich die sich im Bereich einer Fehlstelle aus der SO-Mode ergebende AO-Mode verwendet wird. Die hiermit einhergehende starke Änderung der Phasengeschwindigkeit kann besonders gut detektiert werden.

Vorzugsweise wird der Empfangswandler in eine Ausbreitungsrichtung des Ultraschallsignals verschoben und/oder ein Linear-Array von einem oder mehreren kombinierten Empfangswandlern verwendet, wobei sich durch die räumlich größere Abdeckung der Messstrecke mittels des Linear-Arrays zumindest in Teilen die Relativbewegung des Empfängers zum Sender gespart werden kann. Die Verwendung einer Mehrzahl von in Messrichtung hintereinander angeordneten Empfängermitteln führt bei einem Anregungspuls (auch Puls-Burst) zu einer faktisch gleichzeitigen Mehrzahl von Messungen für die jeweiligen Positionen. Insbesondere kann ein Linear-Array mit mehreren hintereinander angeordneten Empfangswandlern mit jeweils einem oder mehreren Empfangskanälen schneller räumlich größere Messstrecken abdecken.

Zur gezielten Anregung einer Ausbreitungsrichtung kann ebenfalls ein Phased-Array-Sendewandler verwendet werden. Ansonsten entspricht die Ausbreitungsrichtung vorzugsweise der Mess- bzw. Prüfrichtung, d.h. der Richtung, in die der oder die Empfangswandler bewegt werden, wobei es sich um eine geradelinige Bewegung entlang der Fläche weg vom Empfangswandler oder auf diesen zu handeln sollte.

Generell wird der EMUS-Empfangswandler in Ausbreitungsrichtung oder gegen die Ausbreitungsrichtung der geführten Welle definiert verschoben und an jeder Position wird ein A-Bild (A-Scan) aufgenommen, wobei eine Mehrzahl von A-Scans zu einer Datenmatrix zusammengeführt wird. Über diese Daten wird dann eine zeitlichräumliche Fourier-Transformation durchgeführt. Am Arbeitspunkt des jeweiligen Empfangswandlers erhält man dann die Dispersionsrelation und somit die gewünschten Größen.

Neben den bevorzugt verwendeten A0- und/oder S0-Lambmoden sind auch Lamb-Wellenmoden höherer Ordnung und Moden geführter SH-Wellen geeignet. Für eine A0-Lambmode ergibt sich beispielsweise, dass je näher die Delamination an der Oberfläche positioniert ist, umso kleiner ist die Wellenlänge. Umso stärker ist die Wellenlängenänderung bzw. Phasengeschwindigkeitsänderung der geführten Ultraschallwelle im Bereich der Fehlstelle. Dies wird mit der Position des Empfängers korreliert, so dass die Position des Empfängers senkrecht über der Position der Fehlstelle liegt und die x- und y-Position der Fehlstelle indiziert.

Die eingangs gestellte Aufgabe wird ebenfalls durch eine Vorrichtung zur Durchführung des vor- oder nachbeschriebenen Verfahrens gelöst, wobei diese Vorrichtung einen als EMUS-Wandler ausgebildeten Sendewandler, einen als EMUS-Wandler ausgebildeten Empfangswandler und eine Auswertevorrichtung umfasst und wobei der Empfangswandler zur Detektion unterschiedlicher Wellenlängen ausgebildet ist, d.h. in der Lage ist, breitbandig im Wellenzahl-Raumlk-Raum zu arbeiten. Im Gegensatz hierzu ist der Sendewandler zur gezielten Anregung genau einer Wellenlänge ausgebildet, d.h. er arbeitet schmalbandig im Wellenzahl-Raum.

Es versteht sich, dass in üblicher Weise zu einem Sende- oder Empfangswandler noch etwaige Einhausungen, Kabel oder andere zur Ausbildung des dann im Betrieb verwendeten Prüfkopfes gehören. Sende- bzw. Empfangswandler sind somit synonym zu einem Prüfkopf jeweils mit einem oder mehreren Sendewandlern und/oder einem oder mehreren Empfangswandlern zu lesen.

Es sind unterschiedliche Varianten zur Ausbildung eines breitbandig arbeitenden Empfangswandlers denkbar, erfindungsgemäß ist ein Empfangswandler dergestalt ausgebildet, dass er eine Magnetisierungseinrichtung, die vorzugsweise durch ein wenigstens einen Permanentmagneten aufweisendes Magnetjoch ausgebildet ist, und wenigstens einen Leiter umfasst, der lediglich eine durch ein oder mehrere Wicklungen ausgebildete Leiterschlaufe mit im Betriebsfall quer zur Prüfrichtung verlaufender Hin- und Rückführung aufweist. Anstelle von Permanentmagneten können auch Elektromagnete verwendet werden, sofern für den Zweck der Anregung der gewünschten Moden deren Magnetfeld als statisch oder quasi-statisch angesehen werden kann.

Die Hin- und Rückführung des Empfangswandlers sind die beispielsweise spulenartigen Wicklungen eines elektrischen Leiters, in dem eine Spannung bzw. ein elektrischer Strom induziert wird. Eine Hinführung kann durch ein oder mehrere parallel zueinander ausgerichtete Leiterbahnen ausgebildet werden. Diese Leiterbahnen des wenigstens einen elektrischen Leiters liegen vorzugsweise eng bzw. dicht aneinander und berühren sich mit ihren Isolierschichten. Eine Rückführung ist eine parallel zu einer solchen Hinführung verlaufende Anzahl von einem oder mehreren Leiterbahnen, die durch Umlenkung mit den Hinführungen entsprechend verbunden sind. Durch die Verwendung genau eines Leiters mit einer Leiterschleife ist ein Empfangskanal zur Detektion unterschiedlicher Wellenlängen und der Empfangswandler breitbandig ausgebildet. Bekannte EMUS-Empfangswandler, die durch in einem bestimmten Abstand mäandrierend ausgebildete Leiterbahnen aufweisen, sind zur Detektion spezifischer Wellenlängen ausgebildet. Diese für Reflexions- und Transmissionseffektauswertungen vorgesehenen Empfangswandler sind schmalbandig und nicht breitbandig wie bei der vorliegenden Erfindung ausgebildet.

Im Betriebsfall, d.h. im Fall einer Messung mit einer geeigneten Ausrichtung des Empfangswandlers zur Oberfläche des zu prüfenden Objekts sind Hin- und Rückführung parallel zu dieser Oberfläche und diesbezüglich übereinander angeordnet, d.h. in einer Ansicht entlang der Oberfläche und insbesondere in Fortbewegungsrichtung bzw. Schallausbreitungsrichtung liegen Hin- und Rückführung auf einer Senkrechten zur Oberfläche übereinander (Oberfläche parallel zum Untergrund ausgerichtet). Insbesondere sind Hin- und Rückführung voneinander beabstandet in einem Bereich von 1 bis 5 mm, vorzugsweise von 2 bis 4 mm, damit in dem von der Oberfläche weiter beabstandeten Teil keine Induktionseffekte auftreten. Es versteht sich, dass in den Randbereichen von Hin- und Rückführung diese ineinander übergehen und die Hin- und Rückführung im Mittelteil beabstandet ist.

Zur Ausbildung eines Linear-Arrays ist dieses mit einer Mehrzahl von in Prüfrichtung hintereinander oder nebeneinander angeordneten und miteinander kombinierten Empfangswandlern versehen, wobei gemäß dem Vorstehenden zwischen den Polen eines jeweiligen Magnetjochs zumindest eine entsprechende Hin- und Rückführung als Sensorelement angeordnet ist. Diese sind bezüglich der Oberfläche wiederum übereinander angeordnet.

Vorzugsweise können zumindest zwei der Magnetjoche einen gemeinsamen ferromagnetischen Verbinder aufweisen, was die Vorrichtung vereinfacht aufbauen lässt. Insbesondere wenn sich zwei nebeneinander liegende Magnetjoche einen Pol teilen, sind die hierdurch ausgebildeten Empfangswandler miteinander kombiniert bzw. integriert miteinander ausgebildet. Entsprechend sind die dicht an der Oberfläche anzuordnenden, hintereinander oder nebeneinander liegenden Pole einer solchen Linear-Array-Ausbildung alternierend ausgebildet, um möglichst horizontal, d.h. in der flächigen Erstreckung des Objekts verlaufende Magnetfelder in dem Objekt zu erzeugen. Durch einen gemeinsamen ferromagnetischen Verbinder kann zur Ausbildung eines kompakten Arrays von Linear-Wandlern der Magnetschluss auf der von der Oberfläche des Objekts abgewandten Seite des Empfangswandlers stattfinden.

Zwischen den Polen zumindest eines Magnetjochs und unabhängig davon, ob es sich um einen Empfangswandler mit einem oder mehreren Magnetjochen handelt, können gemäß einer erfindungsgemäßen Weiterbildung vorzugsweise zumindest zwei unabhängige Empfangskanäle ausbildende Leiterschlaufen angeordnet sein, deren Hin- und Rückführung jeweils wieder parallel verlaufen. Geringe, insbesondere wicklungsbedingte Abweichungen von dieser Parallelität werden hierbei nicht berücksichtigt. Diese Hin- und Rückführungen werden in der Regel durch jeweils einen eigenen Leiter ausgebildet. So können beispielsweise durch drei hintereinander ausgebildete Magnetjoche sechs Empfangskanäle ausgebildet werden. Das Linear-Array kann dann in Abhängigkeit des Abstandes der Leiterschleifen in Messrichtung eine lokale Auflösung aufweisen, die beispielsweise zwischen 1 mm und 5 mm liegt.

In Messrichtung betrachtet liegen die Magnetjoche vorzugsweise hintereinander. Es ist allerdings auch die Verwendung zumindest zweier in Messrichtung nebeneinander befindlicher Linear-Arrays möglich, so dass diese eine Matrix von Empfangswandlers bilden und einen größeren Bereich abdecken. Gegebenenfalls werden für die Anregung der Lambwelle dann ebenfalls mehrere nebeneinander liegende Sendewandler verwendet.

Weitere Vorteile und Einzelheiten der Erfindung sind der nachfolgenden Figurenbeschreibung zu entnehmen, schematisch dargestellt zeigt:
- Fig. 1: eine Wellenlängenänderung einer geführten Welle an einer Delamination in einem Verbundwerkstoff,
- Fig. 2: eine Dispersionskurve einer AO-Mode für 100 %, 75 % und 25 % Plattendicke,
- Fig. 3: eine schematische Prüfkopfanordnung mit einem Sendewandler und einem Empfangswandler,
- Fig. 4: eine schematische Prüfkopfanordnung mit einem Sendewandler und einem Linear-Array,
- Fig. 5: einen B-Scan mit einem mit einer Fehlstelle versehenen Bereich,
- Fig. 6: die mit dem erfindungsgemäßen Verfahren ermittelten Wellenzahlverschiebungen,
- Fig. 7: einen Teil einer erfindungsgemäßen Vorrichtung in Form eines Sendewandlers,
- Fig. 8: eine Ansicht mit einem Teil einer erfindungsgemäßen Vorrichtung in Form eines Empfangswandlers,
- Fig. 9: einen Teilausschnitt eines erfindungsgemäßen Empfangswandlers,
- Fig. 10: einen weiteren Empfangswandler in einer Seitenansicht über einem Objekt,
- Fig. 11: eine Kalibrierkurve für die Auswertung im erfindungsgemäßen Verfahren.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1 oder 11. Sofern sinnvoll, sind funktional gleichwirkende Teile mit identischen Bezugsziffern versehen.

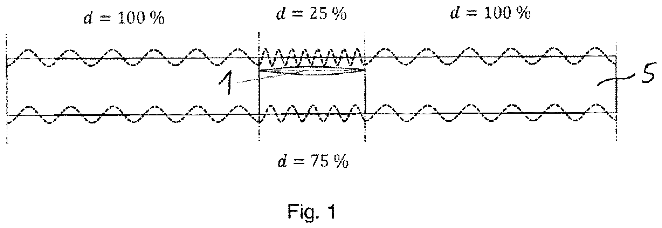

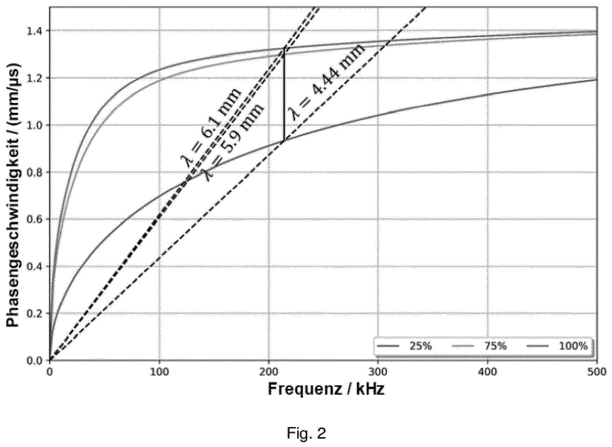

Das erfindungsgemäße Verfahren beruht auf dem in Fig. 1 abgebildeten Effekt, dass sich die lokale Phasengeschwindigkeit bzw. lokale Wellenlänge im Bereich einer Fehlstelle 1 in Form einer sich flächig erstreckenden Inhomogenität, vorliegend eine Delamination, in einer Tiefenlage von 25 % einer Dicke d eines flächig ausgebildeten Objekts 5 aus Faserverbundwerkstoff bzw. einem Faserverbundmaterial ändert. Die Inhomogenität erstreckt sich flächig in Richtung des beispielsweise als Flugzeugrumpfelement ausgebildeten Objekts. In den Bereichen mit einer Dicke d von 100 % links und rechts der dargestellten Fehlstelle 1 liegt eine Wellenlänge λ von 6 mm vor. Oberhalb der Delamination, d.h. hin zu der Seite, auf der ein Empfangswandler und ein Sendewandler anzuordnen sind, beträgt die Dicke des Objekts 25 %, entsprechend sind 75 % der Verbundwerkstoffdicke unterhalb der Delamination. Während sich aufgrund dieser Randbedingungen links und rechts der Fehlstelle eine lokale Wellenlänge λ des Ultraschallsignals von 6 mm ergibt, ist diese im Bereich der Delamination auf λ=4,44 mm reduziert. Diese lokale Wellenlängenänderung kann mit einer erfindungsgemäßen Vorrichtung bzw. dem erfindungsgemäßen Verfahren erfasst werden. Die Wellenlängenänderung der geführten Welle im Bereich der 25 % Dicke der Platte, d.h. zwischen der in der Fig. 1 oberen Oberfläche und der Fehlstelle 1 ergibt sich aus der Dispersionskurve für eine bestimmte Frequenz, die vorliegend rein exemplarisch bei 210 kHz, insbesondere liegt die Frequenz für Objekte einer Gesamtdicke bis 8 mm vorzugsweise in einem Bereich zwischen 200 kHz und 220 kHz (Fig. 2).

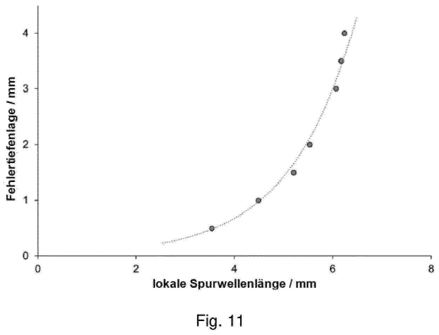

Für die vorliegend angeregte A0-Lambmode ergibt sich, dass je näher die Delamination an der Oberfläche ist, desto kleiner ist die Wellenlänge und umso stärker ist die Wellenlängenänderung der geführten Ultraschallwelle. Für das vorliegend verwendete Objekt in Form einer 4 mm CFK-Platte und eine AO-Mode zeigt Fig. 11 exemplarisch diesen Zusammenhang, wobei die detektierte lokale, d.h. im Bereich der Fehlstelle 1 entstandene Spurwellenlänge bzw. Wellenlänge λ = 4,44 mm zu einer Tiefe von ungefähr 0,5 mm gehört, d.h. die Delamination liegt bei einer Dicke von 4 mm bei 12,5 %.

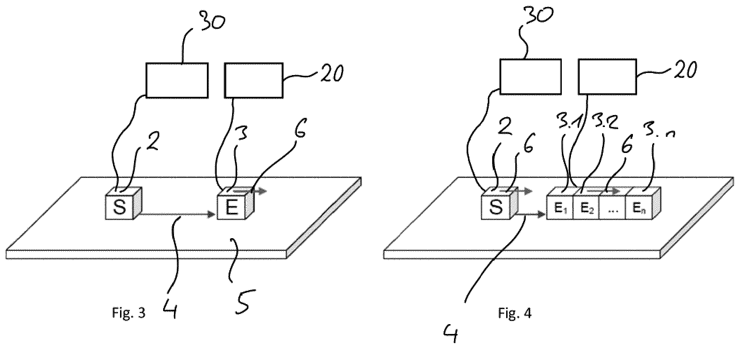

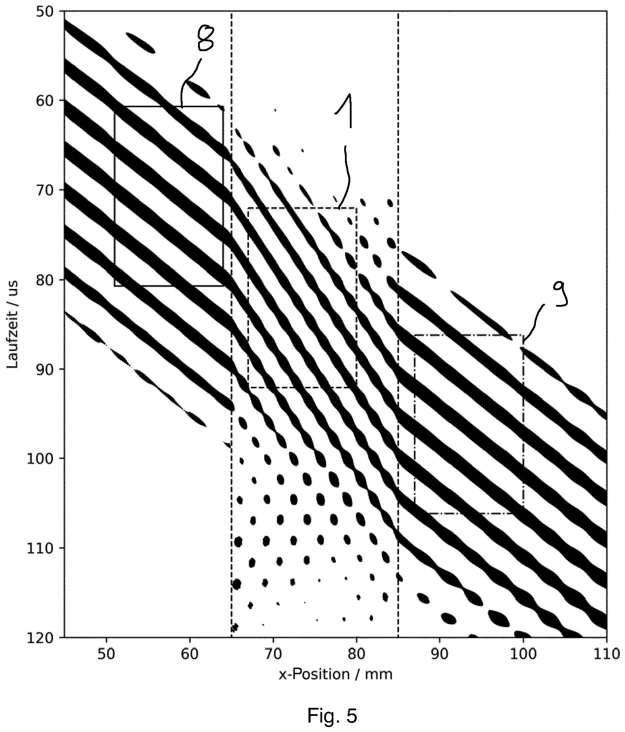

Die Fig. 3 und 4 zeigen schematische Darstellungen der Vorrichtung mit einem Sendewandler 2 und einem Empfangswandler 3 bzw. einem Sendewandler 2 und einem Linear-Array aus mehreren Empfangswandlern 3.1, 3.2 bis 3.n. Die EMUS-Wandler werden mittels einer Steuereinheit 30 zur Ansteuerung der Sendewandler 2 und mittels einer Auswertevorrichtung 20 auf Seiten des oder der Empfangswandler betrieben. Die Auswertevorrichtung 20 ist für den Empfang des Ultraschallsignals vorgesehen und kann zusätzlich noch separat, d.h. entfernt angeordnete EDV-Mittel aufweisen. Ein Pfeil 4 indiziert die Schallausbreitungsrichtung und die Messrichtung in einem Objekt 5. Der oder die Empfangswandler (Fig. 3) werden erfindungsgemäß in Schallausbreitungsrichtung gemäß Pfeil 6 bewegt und für jede entsprechend vorgebbare Position der gewünschten Auflösung wird ein Schuss des Sendewandlers 2 detektiert und ein sogenannter A-Scan aufgenommen. Die A-Scans stellen den zeitlichen Verlauf der Signalamplitude an dem Ort des Empfängers dar. Mehrere A-Scans können zu einer Datenmatrix (B-Scan, Fig. 5) zusammengeführt werden, so dass mehrere räumliche Fourier-Transformationen zu verschiedenen Zeitpunkten durchgeführt werden können. Hieraus erhält man am Arbeitspunkt, d.h. an dem Ort des Empfängers die Dispersionsrelation und damit letztlich die gewünschten Grö-ßen. Das Verfahren wird gemäß der Variante nach Fig. 4 ganz ähnlich durchgeführt, wobei allerdings hier eine Empfangswandlerkombination mit Empfangswandlern 3.1, 3.2 bis 3.n als Linear-Array jeweils von einem einzigen Schuss das ggf. variierte Ultraschallsignal empfangen. Die räumliche Auflösung kann hierbei je nach Messpunktauflösung des nach Fig. 3 dargestellten Setups diesem gegenüber etwas reduziert sein, da die Empfängerspulen einen fest vorgegebenen Abstand zueinander haben und somit die Auflösung des Linear-Arrays vorgegeben ist. Anschließend kann der Linear-Array ebenfalls wiederum gemäß Pfeil 6 bewegt werden. Wenn man dieselbe Stelle nicht mehrfach mit unterschiedlichen Empfängern 3.1 bis 3.n desselben Linear-Arrays messen möchte, z.B. um die Auflösung zu verbessern, wird der Array jeweils um die Gesamtlänge des Arrays in Ausbreitungsrichtung 4 verschoben.

Die Fig. 5 zeigt exemplarisch für einen oberflächennahen Defekt in einer Tiefe von 12,5 % die Amplitude des detektierten Ultraschallsignals im sogenannten B-Scan, wobei auf der x-Achse die Entfernung des Empfangswandlers 3 vom Sendewandler 2 entlang der Messstrecke x abgetragen ist. Die y-Achse ist die Laufzeit des detektierten Signals. Es kommt zu einer erkennbaren Variation im Ultraschallsignal, wobei der Bereich der Fehlstelle 1, der für die Auswertung verwendet wird, durch einen gestrichelten Kasten dargestellt ist. Fehlstellenfreie, für die Auswertung verwendete Bereiche vor und nach der Fehlstelle 1 entlang der Messstrecke sind mit einem Kasten 8 mit einer durchgezogenen Linie und mit einem Kasten 9 mit strichpunktierter Linie dargestellt.

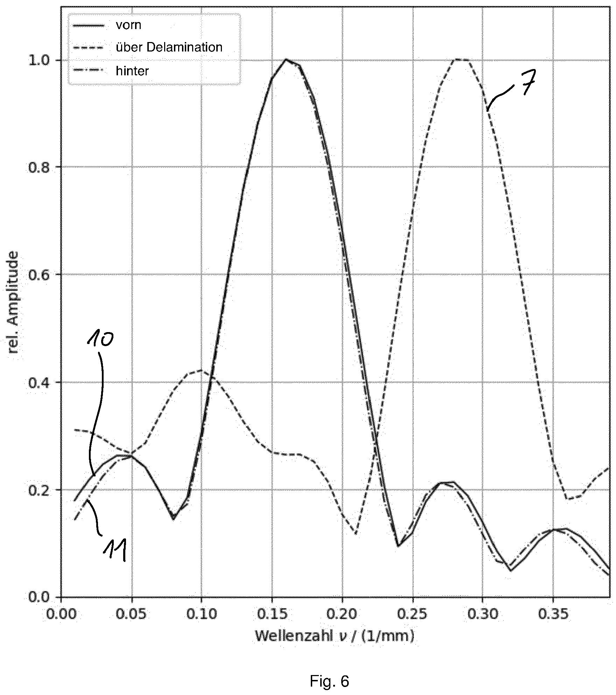

Die zu der Fehlstelle 1 ermittelten Amplituden im Wellenzahlspektrum sind in der zugehörigen Fig. 6 entsprechend als gestrichelte Kurve 7 dargestellt, die den umrandeten Bereichen 8 und 9 (durchgezogene und strichpunktierte Linie) zugehörigen Wellenzahlspektren sind quasi übereinanderliegend als durchgezogene und strichpunktierte Linien 10 und 11 dargestellt. Aus der ermittelten Wellenzahl kann mit Hilfe der Relation der Fig. 11, die exemplarisch anhand von einer großen Anzahl von Versuchen für die zu untersuchenden Materialien experimentell ermittelt wurde, dann zur Bestimmung der Tiefenlage der Fehlstelle führen. Die in der Fig. 11 abgebildete Kalibrierkurve kann für eine Vielzahl von Verbundwerkstoffen in einer Datenbank hinterlegt werden, auf die die Auswerterichtung zugreifen kann, bzw. die in der Auswertevorrichtung hinterlegt ist.

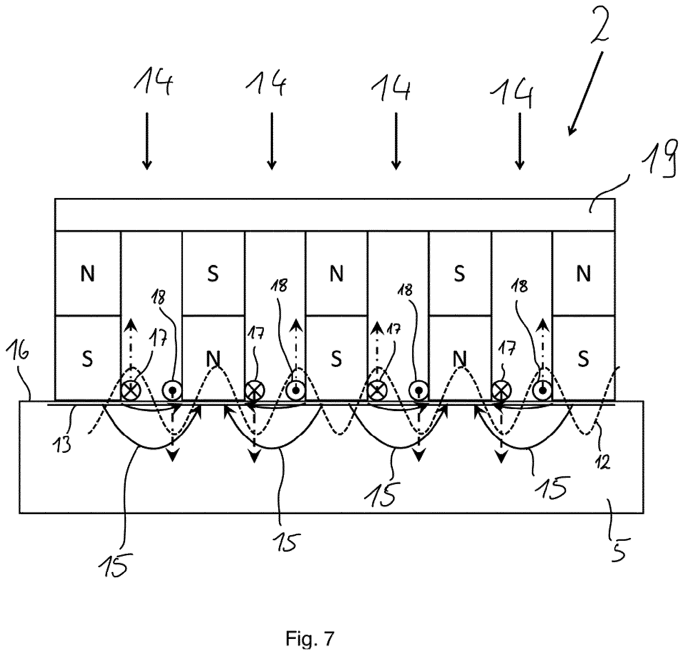

Für die Anregung einer geführten Mode A0 ist es bekanntlich notwendig, dass die Kräfte senkrecht auf die Platte wirken, mit Hilfe der Lorenzkraft kann dann eine senkrechte Kraft auf den Testkörper wirken, wozu allerdings das Magnetfeld als auch der Wirbelstrom tangential zur Platte ausgerichtet werden. Hierfür ist der Sendewandler nach Fig. 7 ausgebildet, der in dieser Figur 7 in einer Anlageposition an bzw. Auflageposition auf dem Objekt 5 dargestellt ist. Die strichlinierte Kurve 12 zeigt die Auslenkung der angeregten AO-Mode. Eine leitfähige Schicht 13 in Form eines Blitzschutzgitters ist als durchgezogene Linie dargestellt und in das einlagig dargestellte Objekt 5 eingebettet. Hierdurch ist die Schicht 13 mit den weiteren Bereichen des Objekts 5 akustisch gekoppelt.

Der dargestellte Sendewandler 3, der von einer nicht weiter dargestellten Steuerelektronik 30 angesteuert wird (vgl. Fig. 3 und 4) umfasst weiterhin eine Mehrzahl von Magnetjochen 14, die hinsichtlich ihrer Nord- und Südpole mit N und S gekennzeichnet sind. Die sich ergebenden magnetischen Feldlinien 15 laufen vergleichsweise parallel zur Oberfläche 16 des Objekts. Leiterstücke 17 laufen mit indizierten Stromflussrichtungen in die Figurenebene hinein und weitere Leiterstücke 18 laufen mit indizierten Stromflussrichtungen aus der Figurenebene heraus. Leiterstücke 17 und 18 sind zwischen den Magnetpolen dergestalt beabstandet, dass bei einer bestimmten Anregungsfrequenz eine AO-Mode angeregt wird.

Wie auch beim Empfangswandler können die Magnetjoche 14 einen gemeinsamen ferromagnetischen Verbinder 19 aufweisen und so einfacher und kompakter aufgebaut werden.

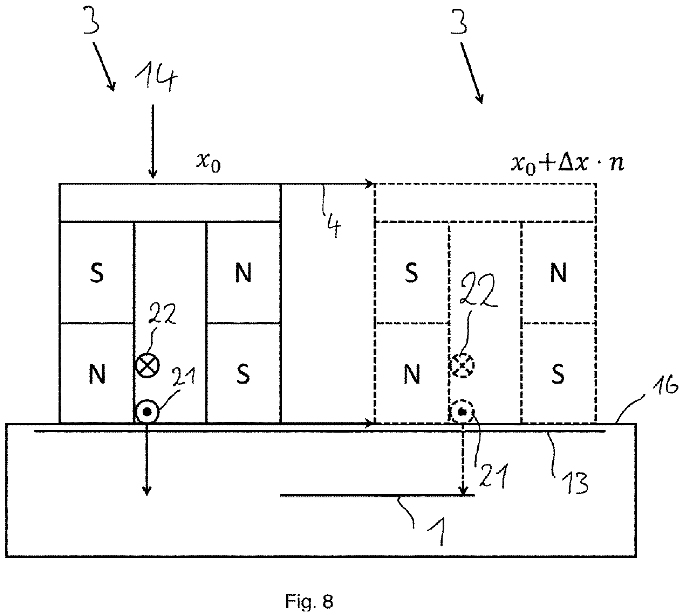

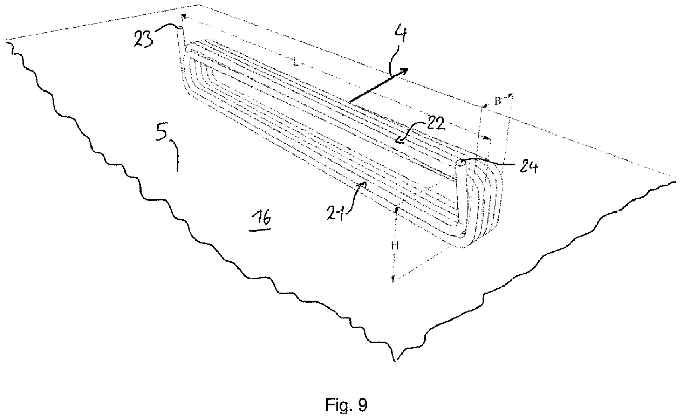

Fig. 8 zeigt einen erfindungsgemäßen Empfangswandler an einer ersten Position x0 (linke Darstellung des Empfangswandlers) sowie an einer Position x0 +Δx·n, wobei der Empfangswandler zwischen den Polen des Magnetjochs 14 jeweils eine Hinführung 21 und eine Rückführung 22 aufweist, die jeweils durch eine Mehrzahl von Wicklungen einer Leiterschlaufe ausgebildet werden (vergl. Fig. 9). Δx ist die Schrittweise zwischen einzelnen Messungen, n ist die Anzahl der Schritte. Mittels der als Bildschutzgitter ausgebildeten leitfähigen Schicht 13 tastet der Empfangswandler die lokale Wellenlänge des im Objekt 5 propagierten Ultraschallsignals ab und detektiert vorliegend am Ort x0+Δx·n die Fehlstelle 1 mittels der Änderung der Wellenlänge. Der Empfangswandler 3 ist breitbandig ausgebildet. Eine exemplarische Ausbildung einer Leiterschlaufe mit Hinführung 21 und Rückführung 22 ist in der Fig. 9 dargestellt, wobei eine spulenartig aufgebaute Leiterschlaufe mit insgesamt zehn unteren Wicklungsabschnitten die Hinführung 21 und mit 10 oberen Wicklungsabschnitten die Rückführung 22 ausbildet. Die Anschlüsse 23 und 24 des Leiters führen üblicherweise zu RC- bzw. RC+-Gliedern der Auswertevorrichtung, über die dann die induzierten Ströme abgegriffen und der weiteren Auswertung zugeführt werden. Vorliegend ist die Gesamtbreite B betrachtet in Richtung quer zur Richtung 4 zwischen 0,5 mm und 1,5 mm, insbesondere 1 mm, die Länge L der Leiterschlaufe liegt zwischen 8 und 12 mm, vorliegend vorzugsweise bei 10 mm und die Höhe der Leiterschlaufe insgesamt liegt zwecks Vermeidung von Induktionseffekten in der Leiterbahnrückführung 22 bei H gleich 3 mm.

Bezüglich einer Senkrechten auf die Oberfläche des Objekts 5 liegen Hin- und Rückführung beabstandet übereinander.

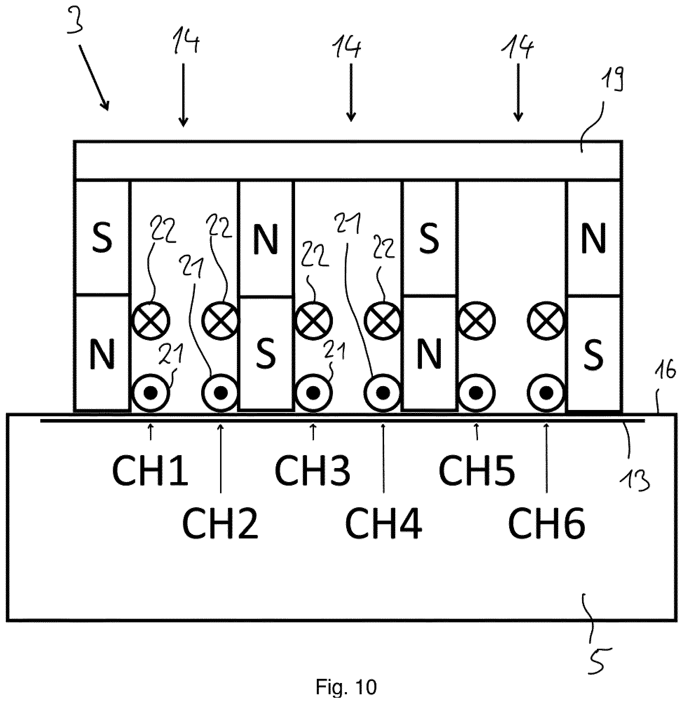

Eine Empfangswandlerkombination in Form eines Linear-Arrays ist gemäß Fig. 10 mit einer Anzahl von sechs unabhängig voneinander arbeitenden Kanälen, die jeweils durch Leiterschlaufen wie vorbeschrieben ausgebildet werden, versehen. Diese Kanäle CH1 bis CH6 in Form von einzelnen Leiterschlaufen sind jeweils zu zweit zwischen Polen jeweiliger Magnetjoch 14 angeordnet. Das Linear-Array weist ebenfalls einen ferromagnetischen Verbinder 19 für den Magnetschluss auf und die jeweiligen, zwischen zwei Polen eines Magnetjochs ausgebildeten Leiterschlaufen bzw. Hin- und Rückführungen 21 und 22 sind rund 1 mm voneinander beabstandet. Ein solcher Empfangswandlerkombination entspricht einem in Fig. 4 dargestellten Empfangswandler mit Einheiten 3.1, 3.2 und 3.3.

Zusammenfassend kann mit dem erfindungsgemäßen Verfahren die Position luftfahrtrelevanter Defekte in Faserverbundwerkstoffen mit Hilfe selektiv geführter Ultraschallwellenmoden detektiert und die Tiefenlage erfasst werden. Es werden Modenumwandlungseffekt und Arbeitspunktverschiebungen im Modenspektrum lokal erfasst und die in den vorhandenen Faserverbundwerkstoffen ungünstigen Signalzu-Rausch-Verhältnisse bei der Amplitudenbewertung reflektierte und/oder transmittierte Ultraschallsignale vermieden. Hierbei können Defekte bis zu einem minimalen Durchmesser von 3 mm erkannt werden.

## Patentansprüche

1. Verfahren zur zerstörungsfreien Prüfung von insbesondere flächig ausgebildeten Objekten (5) aus einem Faserverbundwerkstoff, vorzugsweise in Luftfahrtanwendungen, der zumindest einlagig ausgebildet ist, wobei mittels eines Sendewandlers (2) in dem Objekt ein Ultraschallsignal erzeugt wird, welches nach seiner Ausbreitung im Objekt (5) mittels eines Empfangswandlers (3) detektiert wird, wobei das Ultraschallsignal durch den zumindest einen als EMUS-Wandler ausgebildeten Sendewandler (2) mittels einer leitfähigen Schicht (13), die auf der Oberfläche des Objekts oder in diesem angeordnet ist, als elektromagnetisches Ultraschallsignal erzeugt wird, wobei mittels einer Auswertevorrichtung (20) das mittels des zumindest einen als EMUS-Wandler ausgebildeten Empfangswandlers (3) detektierte Ultraschallsignal zur Bestimmung einer Fehlstelle (1) in Form einer Delamination, eines Porenfeldes oder anderer, dergleichen flächig ausgebildeter Inhomogenitäten verwendet wird, **dadurch gekennzeichnet, dass** zur Bestimmung der Fehlstelle (1) in der Auswertevorrichtung (20) die lokale Phasengeschwindigkeit und/oder die lokale Wellenlänge des empfangenen Ultraschallsignals am Ort des Empfangswandlers bestimmt und zur Bestimmung der Tiefe der Fehlstelle (1) verwendet wird.

2. Verfahren nach Anspruch 1, **dadurch gekennzeichnet, dass** die Prüfung koppelmittelfrei erfolgt.

3. Verfahren nach einem der vorherigen Ansprüche, **dadurch gekennzeichnet, dass** mittels des Sendewandlers (2) eine geführte Welle erzeugt wird.

4. Verfahren nach einem der vorherigen Ansprüche, **dadurch gekennzeichnet, dass** eine werkstoffspezifische Korrelation der Tiefe der Fehlstelle (1) mit der Phasengeschwindigkeit und/oder mit der Wellenlänge zur Bestimmung der Fehlstellentiefe verwendet wird.

5. Verfahren nach einem der vorherigen Ansprüche, **dadurch gekennzeichnet, dass** zur Bestimmung der Fehlstelle (1) zumindest eine räumliche Fourier-Transformation des detektierten Ultraschallsignals über zumindest einen Teil einer Messstrecke des Empfangswandlers (3) durchgeführt wird.

6. Verfahren nach Anspruch 5, **dadurch gekennzeichnet, dass** aus einer insbesondere statistischen Betrachtung der ermittelten Spektren zu verschiedenen Zeitpunkten das Maximum der Wellenzahl und/oder der Phasengeschwindigkeit bestimmt wird.

7. Verfahren nach einem der vorherigen Ansprüche, **dadurch gekennzeichnet, dass** zur Prüfung von Fehlstellen (1) in einer Tiefenlage zwischen 0 % und bis insbesondere 50 % der Dicke des Objekts (5) die AO-Mode einer Lambwelle verwendet wird.

8. Verfahren nach einem der vorherigen Ansprüche, **dadurch gekennzeichnet, dass** zur Prüfung von Fehlstellen (1) insbesondere in einer Tiefenlage zwischen 50 % und 100 % der Dicke des Objekts (5) zunächst die SO-Mode einer Lambwelle verwendet wird, wobei zur Auswertung zusätzlich die sich im Bereich einer Fehlstelle (1) aus der SO-Mode ergebene AO-Mode verwendet wird.

9. Verfahren nach einem der vorherigen Ansprüche, **dadurch gekennzeichnet, dass** der Empfangswandler (3) in Ausbreitungsrichtung des Ultraschallsignals verschoben und/oder ein Linear-Array von einem oder mehreren Empfangswandlern (3) verwendet wird.

10. Vorrichtung zur Durchführung des Verfahrens nach einem der vorherigen Ansprüche, umfassend einen als EMUS-Wandler ausgebildeten Sendewandler (2), einen als EMUS-Wandler ausgebildeten Empfangswandler (3) und eine Auswertevorrichtung (20), wobei der Empfangswandler (2) zur Detektion unterschiedlicher Wellenlängen ausgebildet ist, wobei der Empfangswandler (3) wenigstens eine Magnetisierungseinrichtung, die vorzugsweise durch ein wenigstens einen Permanentmagneten aufweisendes Magnetjoch ausgebildet ist, umfasst, wobei der Empfangswandler wenigstens einen Leiter umfasst, der lediglich eine durch ein oder mehrere Wicklungen ausgebildete Leiterschlaufe mit im Betriebsfall quer zur Prüfrichtung verlaufender Hin- und Rückführung (21, 22) aufweist, und wobei die Auswerteeinrichtung ausgebildet ist, zur Bestimmung der Fehlstelle die lokale Phasengeschwindigkeit und/oder die lokale Wellenlänge des empfangenen Ultraschallsignals am Ort des Empfangswandlers zu bestimmen und zur Bestimmung der Tiefe der Fehlstelle zu verwenden.

11. Vorrichtung nach Anspruch 10, wobei im Betriebsfall Hin- und Rückführung (21, 22) parallel zur Oberfläche (16) des zu prüfenden Objekts (5) und diesbezüglich übereinander angeordnet sind.

12. Vorrichtung nach Anspruch 11, aufweisend eine Mehrzahl von in Prüfrichtung hintereinander oder nebeneinander angeordneten und miteinander kombinierten Empfangswandlern (3.1, 3.2, 3.n) zur Ausbildung eines Linear-Arrays.

13. Vorrichtung nach Anspruch 11 oder 12, wobei zumindest zwei Magnetjoche der kombinierten Empfangswandler einen gemeinsamen ferromagnetischen Verbinder (19) aufweisen.

14. Vorrichtung nach einem der Ansprüche 11 bis 13, wobei zwischen den Polen zumindest eines Magnetjochs zumindest zwei unabhängige Empfangskanäle ausbildende Leiterschleifen angeordnet sind, deren Hin- und Rückführungen (21, 22) jeweils parallel verlaufen.

## Claims

1. Method for nondestructively testing in particular planar objects (5) made of a fibre composite material, preferably in aviation applications, which is in at least single-layer form, wherein a transmitting transducer (2) is used to generate an ultrasonic signal in the object that, after propagating in the object (5), is detected by means of a receiving transducer (3), wherein the ultrasonic signal is generated as an electromagnetic ultrasonic signal by the at least one transmitting transducer (2), which is in the form of an EMUS transducer, by means of a conductive layer (13) arranged on the surface of the object or in said object, wherein an evaluation apparatus (20) is used to utilize the ultrasonic signal detected by means of the at least one receiving transducer (3) that is in the form of an EMUS transducer in order to determine a defect (1) in the form of a delamination, a porefield or other such planar inhomogeneities, **characterized in that** the defect (1) is determined by virtue of the local phase velocity and/or the local wavelength of the received ultrasonic signal at the location of the receiving transducer being determined in the evaluation apparatus (20) and used to determine the depth of the defect (1).

2. Method according to Claim 1, **characterized in that** the testing is performed without coupling means.

3. Method according to either of the preceding claims, **characterized in that** the transmitting transducer (2) is used to produce a guided wave.

4. Method according to one of the preceding claims, **characterized in that** a material-specific correlation of the depth of the defect (1) with the phase velocity and/or with the wavelength is used to determine the defect depth.

5. Method according to one of the preceding claims, **characterized in that** the defect (1) is determined by performing at least one spatial Fourier transformation of the detected ultrasonic signal over at least part of a measuring section of the receiving transducer (3).

6. Method according to Claim 5, **characterized in that** the maximum of the wavenumber and/or the phase velocity is determined from an in particular statistical consideration of the ascertained spectra at different times.

7. Method according to one of the preceding claims, **characterized in that** defects (1) at a depth of between 0% and up to in particular 50% of the thickness of the object (5) are tested by using the A0 mode of a Lamb wave.

8. Method according to one of the preceding claims, **characterized in that** defects (1) in particular at a depth of between 50% and 100% of the thickness of the object (5) are tested by initially using the S0 mode of a Lamb wave, the A0 mode that results from the S0 mode in the region of a defect (1) additionally being used for evaluation.

9. Method according to one of the preceding claims, **characterized in that** the receiving transducer (3) is moved in the direction of propagation of the ultrasonic signal and/or a linear array comprising one or more receiving transducers (3) is used.

10. Apparatus for performing the method according to one of the preceding claims, comprising a transmitting transducer (2) in the form of an EMUS transducer, a receiving transducer (3) in the form of an EMUS transducer and an evaluation apparatus (20), wherein the receiving transducer (2) is designed to detect different wavelengths, wherein the receiving transducer (3) comprises at least one magnetization device, which is preferably formed by a magnet yoke comprising at least one permanent magnet, wherein the receiving transducer comprises at least one conductor, which merely comprises a conductor loop, formed by one or more windings, with supply and return paths (21, 22) that, during operation, run at right angles to the direction of testing, and wherein the evaluation device is designed to determine the defect by determining the local phase velocity and/or the local wavelength of the received ultrasonic signal at the location of the receiving transducer and using them to determine the depth of the defect.

11. Apparatus according to Claim 10, wherein during operation the supply and return paths (21, 22) are arranged parallel to the surface (16) of the object (5) to be tested and above one another with reference thereto.

12. Apparatus according to Claim 11, having a plurality of receiving transducers (3.1, 3.2, 3.n) that are arranged in succession in the direction of testing or beside one another and are combined with one another, in order to form a linear array.

13. Apparatus according to Claim 11 or 12, wherein at least two magnet yokes of the combined receiving transducers have a common ferromagnetic connector (19).

14. Apparatus according to one of Claims 11 to 13, wherein at least two conductor loops forming independent receiving channels are arranged between the poles of at least one magnet yoke, each of the supply and return paths (21, 22) of said conductor loops running parallel.

## Revendications

1. Procédé de test non destructif d'objets (5), en particulier d'objets sensiblement bidimensionnels, en un matériau composite renforcé par des fibres, de préférence dans des applications aéronautiques, qui est formé au moins d'une couche, un signal ultrasonore étant généré dans l'objet au moyen d'un transducteur d'émission (2), lequel signal étant détecté, après sa propagation dans l'objet (5), au moyen d'un transducteur de réception (3), le signal ultrasonore étant généré sous forme d'un signal ultrasonore électromagnétique par l'au moins un transducteur d'émission (2), conçu comme un transducteur EMUS, au moyen d'une couche conductrice (13) qui est disposée sur la surface de l'objet ou dans celui-ci, un dispositif d'évaluation (20) utilisant le signal ultrasonore détecté au moyen de l'au moins un transducteur de réception (3) conçu comme un transducteur EMUS afin de déterminer un défaut (1) sous la forme d'un délaminage, d'une zone de pores ou autres inhomogénéités similaires sensiblement bidimensionnelles, **caractérisé en ce que**, pour déterminer le défaut (1) dans le dispositif d'évaluation (20), la vitesse de phase locale et/ou la longueur d'onde locale du signal ultrasonore reçu sont déterminées à l'emplacement du transducteur de réception et sont utilisées pour déterminer la profondeur du défaut (1).

2. Procédé selon la revendication 1, **caractérisé en ce que** le test est effectué sans aucun agent de couplage.

3. Procédé selon l'une des revendications précédentes, **caractérisé en ce qu'**une onde guidée est générée au moyen du transducteur d'émission (2).

4. Procédé selon l'une des revendications précédentes, **caractérisé en ce qu'**une corrélation spécifique au matériau entre la profondeur du défaut (1) et la vitesse de phase et/ou la longueur d'onde est utilisée pour déterminer la profondeur du défaut.

5. Procédé selon l'une des revendications précédentes, **caractérisé en ce que**, pour déterminer le défaut (1), au moins une transformation spatiale de Fourier du signal ultrasonore détecté est effectuée sur au moins une partie d'une section de mesure du transducteur de réception (3).

6. Procédé selon la revendication 5, **caractérisé en ce que** le maximum du nombre d'onde et/ou de la vitesse de phase est déterminé à partir d'une considération notamment statistique des spectres déterminés à différents instants.

7. Procédé selon l'une des revendications précédentes, **caractérisé en ce que** le mode A0 d'une onde de Lamb est utilisé pour tester des défauts (1) à une profondeur comprise entre 0 % et notamment 50 % de l'épaisseur de l'objet (5).

8. Procédé selon l'une des revendications précédentes, **caractérisé en ce que** le mode S0 d'une onde de Lamb est d'abord utilisé pour tester des défauts (1), notamment à une profondeur comprise entre 50 % et 100 % de l'épaisseur de l'objet (5), le mode A0 résultant du mode S0 dans la zone d'un défaut (1) étant en plus utilisé pour l'évaluation.

9. Procédé selon l'une des revendications précédentes, **caractérisé en ce que** le transducteur de réception (3) est décalé dans le sens de propagation du signal ultrasonore et/ou un réseau linéaire d'un ou plusieurs transducteurs de réception (3) est utilisé.

10. Dispositif destiné à mettre en œuvre le procédé selon l'une des revendications précédentes, ledit dispositif comprenant un transducteur d'émission (2) conçu comme un transducteur EMUS, un transducteur de réception (3) conçu comme un transducteur EMUS et un dispositif d'évaluation (20), le transducteur de réception (2) étant conçu pour détecter différentes longueurs d'onde, le transducteur de réception (3) comprenant au moins un module de magnétisation qui est de préférence formé par une culasse magnétique comportant au moins un aimant permanent, le transducteur de réception comprenant au moins un conducteur qui comporte uniquement une boucle conductrice formée par un ou plusieurs enroulements effectuant en fonctionnement un aller et un retour (21, 22) transversalement au sens de test et le dispositif d'évaluation étant conçu pour déterminer la vitesse de phase locale et/ou la longueur d'onde locale du signal ultrasonore reçu à l'emplacement du transducteur de réception afin de déterminer le défaut et pour les utiliser afin de déterminer la profondeur du défaut.

11. Dispositif selon la revendication 10, en fonctionnement l'aller et le retour (21, 22) étant disposés parallèlement à la surface (16) de l'objet (5) à tester et, à cet égard, l'un au-dessus de l'autre.

12. Dispositif selon la revendication 11, comprenant une pluralité de transducteurs de réception (3.1, 3.2, 3.n) disposés les uns derrière les autres ou les uns à côté des autres dans le sens de test et combinés les uns avec les autres pour former un réseau linéaire.

13. Dispositif selon la revendication 11 ou 12, au moins deux culasses magnétiques des transducteurs de réception combinés comportant un connecteur ferromagnétique commun (19).

14. Dispositif selon l'une des revendications 11 à 13, au moins deux boucles conductrices, qui forment des canaux de réception indépendants et dont les allers et retours (21, 22) s'étendent chacun parallèlement, étant disposées entre les pôles d'au moins une culasse magnétique.
